**Europäisches Patentamt**

**European Patent Office**

**Office européen des brevets**

(19)

(11) Veröffentlichungsnummer: **0 197 324**
A2

(12) # EUROPÄISCHE PATENTANMELDUNG

(21) Anmeldenummer: **86103111.0**

(22) Anmeldetag: **08.03.86**

(51) Int. Cl.⁴: **B 32 B 29/00**
B 32 B 27/04, B 32 B 31/20

(30) Priorität: **09.03.85 DE 3508438**

(43) Veröffentlichungstag der Anmeldung:
**15.10.86 Patentblatt 86/42**

(84) Benannte Vertragsstaaten:
**AT BE CH FR GB LI SE**

(71) Anmelder: **Gruber & Weber**
**Obertsroter Strasse 9**
**D-7562 Gernsbach-Obertsrot(DE)**

(72) Erfinder: **von Wedemeyer, Hans-Werner**
**Schwannweg 131**
**D-7562 Gernsbach(DE)**

(74) Vertreter: **Jackisch, Walter, Dipl.-Ing. et al,**
**Menzelstrasse 40**
**D-7000 Stuttgart 1(DE)**

(54) Gepresste Mehrschichtplatte und Verfahren zu ihrer Herstellung.

(57) Eine gepreßte Mehrschichtplatte (1), die für F-ußböden, Arbeitsplatten für Küchen oder dergleichen verwendet wird, weist eine mittlere Trägerschicht (6) auf, die zwischen zwei Deckschichten (7, 8) angeordnet ist, die aus einer Vielzahl von mit einem Duroplast getränkten Papierbahnen bestehen. Zumindest eine der Deckschichten ist mit einer Schutzschicht (9) aus einem aushärtbaren Kunstharz versehen, wodurch der Abriebwert durch Zugabe von Abriebverfestigern erheblich verbessert wird. Die Schutzschicht (9) wird nach dem Verpressen der Träger- und Deckschichten (6, 7, 8) auf die vorgefertigte Mehrschichtplatte (1) in flüssiger Form aufgetragen. Die Schutzschicht (9) kann einfach durch Walzen, Gießen oder Spritzen auf die fertig bearbeitete Mehrschichtplatte (1) ihre Deckschichten (6, 7) nach Bearbeiten ihrer Kanten und Ränder aufgetragen werden. Die Mehrschichtplatte kann dadurch einfach und schnell hergestellt werden, wobei eine beliebige Menge Abtriebverfestiger zugegeben werden kann.

FIG. 1

EP 0 197 324 A2

Patentanwalt
Dipl.-Ing. Walter Jackisch
7 Stuttgart N, Menzelstraße 40

Gruber & Weber
Obertsroter Str. 9

7562 Gernsbach 5

*1*

A 1-86 928/kmi
7.3.1986

0197324

## Gepreßte Mehrschichtplatte und
## Verfahren zu ihrer Herstellung

Die Erfindung betrifft eine Mehrschichtplatte nach dem
Oberbegriff des Anspruches 1 und ein Verfahren zu ihrer
Herstellung nach dem Oberbegriff des Anspruches 4.

Platten dieser Art sind sogenannte HPL-Platten (high
pressur laminat-Platten bzw. dekorative Schichtpreßstoffplatten), sogenannte Endloslaminatplatten oder
sogenannte KF-Platten (kunststoffbeschichtete dekorative
Flachpreß-Spanplatten) oder Fertigteile, die aus diesen
Platten gepreßt wurden. Solche Mehrschichtplatten werden
vor allem für Fußböden als Verlegeplatten oder als Arbeitsplatten in der Küchenmöbelindustrie oder als Tischplatten verwendet. An solche Platten wird in zunehmendem
Maße die Forderung gestellt, ihr Abriebverhalten zu
verbessern.

Um diese Forderung zu erfüllen, wurden bereits verschiedene
Maßnahmen getroffen, z.B. ist es bekannt, die Duroplast-
bzw. Kunstharzmenge der getränkten Papierbahnen vor dem
Verpressen der Mehrschichtplatte zu erhöhen. Dies ist
aber nur in sehr engen Grenzen möglich, da bei einer
zu großen Kunstharzmenge Risse auftreten können oder die
Oberfläche keine einwandfrei gleichmäßige Durchsicht
und Geschlossenheit der Harzschicht aufweist.

Es ist ferner bekannt, dem Duroplast bzw. dem Kunstharz,
mit dem das Papier getränkt wird, vor dem Verpressen Aluminiumoxyd als Abriebverfestiger zuzugeben. Das Verpressen solcher Schichten ist aber wirtschaftlich sehr aufwendig und teuer, da das Aluminiumoxyd infolge seiner abrasiven Eigenschaften die Preßbleche einer Presse beschädigt oder zerstört, wenn es durch das Schrumpfverhalten der Kunstharze während des Verpressens mit der Oberfläche der Deckschichten der Mehrschichtplatte reibend in Kontakt kommt. Um eine solche Beschädigung zu vermeiden, muß zwischen die Deckschichten und die Preßbleche jeweils eine Schutzfolie gelegt werden. Dies ist umständlich und zeit- und arbeitsaufwendig und verschlechtert auch die Übertragung einer etwa vorhandenen Oberflächenstruktur der Preßbleche auf die zugehörige Deckschicht, da eine unmittelbare Berührung zwischen den Preßblechen und den Deckschichten verhindert ist.

Schließlich ist bei diesen bekannten Mehrschichtplatten und ihren Herstellungsverfahren auch nachteilig, daß die Kanten der Mehrschichtplatten erst nach den oben beschriebenen Maßnahmen zur Erhöhung der Abriebfestigkeit weiterbearbeitet werden können. Bei der Kantenbearbeitung müssen nämlich die Deckschichten teilweise abgetragen werden, so daß dabei die anorganischen Zusätze die spanabhebenden Werkzeuge stark verschleißen. Da die Werkstücke aber nach dem Verpressen noch in erheblichem Maße bearbeitet werden müssen und der Grad des Verschleißwiderstandes von der Menge des eingebrachten Aluminiumoxyds abhängt, kann das Aluminiumoxyd nur in begrenzter Menge zugegeben werden. Andernfalls würden die Werkzeuge zu schnell abgenutzt und eine wirtschaftliche Bearbeitung unmöglich gemacht werden. Außerdem besteht die Gefahr, daß Feuchtigkeit in die Kanten der Mehrschichtplatte eindringen und sie beschädigen kann.

Der Erfindung liegt die Aufgabe zugrunde, eine Mehrschichtplatte dieser Art sowie das Verfahren zu ihrer
Herstellung so auszubilden, daß die Abriebfestigkeit der
Deckschicht auf einfache und kostengünstige Weise wirksam
erhöht werden kann.

Diese Aufgabe wird bei der gattungsgemäßen Mehrschichtplatte erfindungsgemäß mit den kennzeichnenden Merkmalen
des Anspruches 1 und beim gattungsgemäßen Verfahren erfindungsgemäß mit den kennzeichnenden Merkmalen des
Anspruches 4 gelöst.

Infolge der zusätzlichen Kunstharzschutzschicht hat die
erfindungsgemäße Mehrschichtplatte eine wesentlich
größere Abriebfestigkeit als bekannte Mehrschichtplatten.
Die hohe Abriebfestigkeit ist besonders dann gegeben,
wenn nach dem Verpressen und Bearbeiten der Platten und
Kanten zur Erhöhung der Abriebfestigkeit dem Kunstharzlack anorganische Zusätze, wie Aluminiumoxyd, Quarzmehl
oder Korunde, beigegeben werden. Die erfindungsgemäße
Schutzschicht läßt sich sehr preisgünstig auf die Außenseiten der Mehrschichtplatte aufbringen, da sie gemäß
dem erfindungsgemäßen Verfahren nachträglich auf die vorgefertigte Platte beispielsweise durch Walzen, Gießen
oder Spritzen aufgetragen werden kann. Die Schutzschicht
kann vorteilhaft in jeder gewünschten Stärke aufgebracht
werden, so daß eine optimale Anpassung an die technischen und wirtschaftlichen Gegebenheiten möglich ist.
Die Schutzschicht eignet sich besonders vorteilhaft
für Mehrschichtplatten mit einem Dekor, da die Schutzschicht ohne Schwierigkeiten so aufgebracht werden kann,
daß das Dekor durch die Schutzschicht hindurch klar
sichtbar ist. Wenn die Schutzschicht nach der Kantenbearbeitung der Mehrschichtplatte aufgetragen wird, verhindert sie auch, daß Feuchtigkeit in die Platte eindringen kann. Entscheidend ist der Vorteil, daß die

0197324

Schutzschicht nachträglich auf das fertig erzeugte
Produkt aufgebracht wird und bei normalem Raumklima
oder auch unter Verwendung von Wärme oder ultravioletter
Strahlung zur Zeitverkürzung vollständig aushärten kann.
Durch das nachträgliche Aufbringen der Schutzschicht
sind Beschädigungen der Preßwerkzeuge und Kantenbearbeitungswerkzeuge durch Aluminiumoxydzusätze in der
Schutzschicht vermieden, da die Mehrschichtplatten erst
nach dem Verpressen und nach dem Bearbeiten der Kanten
der Mehrschichtplatte mit der Schutzschicht versehen
werden. Man kann bei dem erfindungsgemäßen Verfahren
die Oberflächenstrukturen in üblicher Weise durchführen,
eine dreidimensionale nachträgliche Bearbeitung der
Kanten vornehmen und dann auf der freien Platte die
Schutzschicht aufbringen. Hierbei können Verschleißwerte
erzielt werden, die wesentlich höher sind als von Mehrschichtplatten, die nach herkömmlichen Verfahren hergestellt sind, da eine Begrenzung der Zusatzmenge von
Aluminiumoxyd in der Schutzschicht entfällt.

Wegen der Schutzschicht eignet sich die erfindungsgemäße
Mehrschichtplatte hervorragend für Fußböden und Arbeitsplatten für die Küchenmöbelindustrie und Tischplatten,
die einem hohen Verschleiß und hoher Beanspruchung
ausgesetzt sind. Es können aber auch bereits vorhandene
Platten jederzeit nachträglich mit geringem Arbeits- und
Zeitaufwand mit der Schutzschicht versehen werden, so daß
ihre Abriebfestigkeit erheblich verbessert werden kann.

Es ist aber auch möglich, nach diesem Verfahren alle
Oberflächen von Materialien, wie bereits fertig hergestellte Fußböden und Fahrwege aus Materialien, wie Holz,
Kunststoff, Beton oder dgl., die einem hohen Abrieb
ausgesetzt sind, nach deren Fertigstellung wirkungsvoll
vor solchem Abrieb zu schützen.

Weitere Merkmale der Erfindung ergeben sich aus den weiteren Ansprüchen, der Beschreibung und den Zeichnungen.

Die Erfindung wird anhand mehrerer in den Zeichnungen dargestellter Ausführungsbeispiele näher erläutert. Es zeigt:

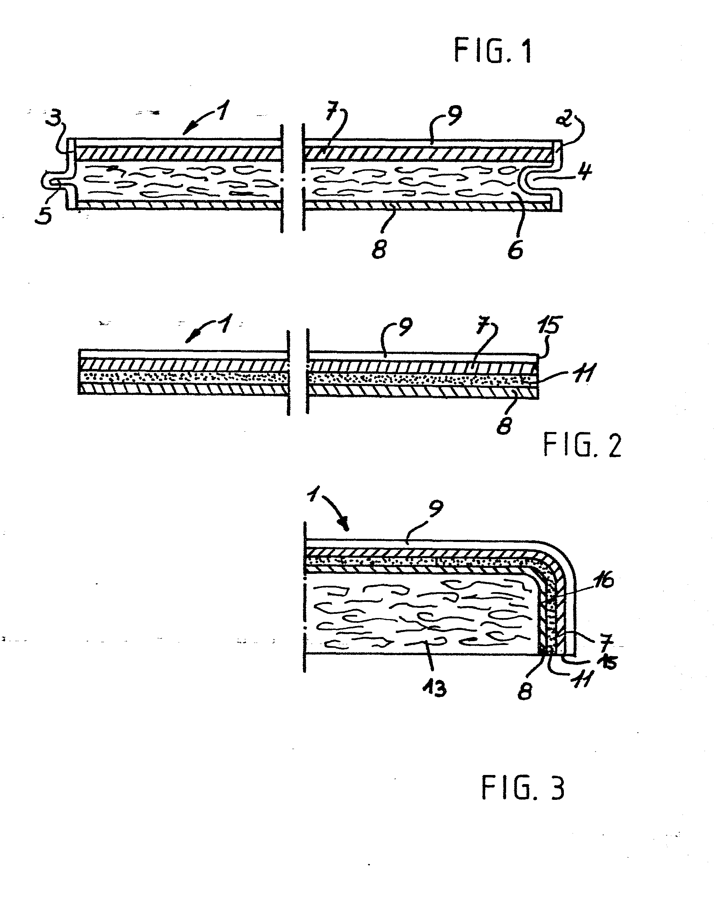

Fig. 1     eine erfindungsgemäße Mehrschichtplatte im Längsschnitt,

Fig. 2
bis 5     jeweils eine Hälfte einer weiteren erfindungsgemäßen Mehrschichtplatte im Längsschnitt.

Die Mehrschichtplatte 1 nach Fig. 1 ist eine Fußbodenverlegeplatte, die mit weiteren entsprechenden (nicht dargestellten) Verlegeplatten nutfederartig zu einem Fußboden zusammengesteckt werden kann. Hierzu weist die Platte 1 an ihren einander gegenüberliegenden Plattenrändern 2, 3 eine Nut 4 und eine Feder 5 auf. Die Platte 1 besteht aus einer mittleren Trägerschicht 6, die z.B. durch eine Spanplatte gebildet ist, sowie aus beidseitigen Duroplast-Deckschichten 7 und 8 mit einer zugehörigen Schutzschicht 9. Die Schutzschicht 9 kann auch längs der Plattenränder vorgesehen sein, wie die Zeichnungen zeigen. Die Deckschichten 7 und 8 haben vorzugsweise eine Dicke von etwa 0,1 mm bis 0,3 mm. Sie bestehen vorzugsweise aus einer oder auch aus einer Vielzahl übereinanderliegender und jeweils mit Melaminharz oder aus Melaminmischkondensatharz oder Melaminharzstoff ge-tränkten (nicht dargestellten) Papierbahnen. Ggf. können die Deckschichten eine (ebenfalls nicht dargestellte) zusätzliche sogenannte Overlay-Schicht aufweisen, die aus einer sehr feinen feinfasrigen Papierschicht besteht, die ebenfalls mit Melaminharz oder dgl. getränkt und durchsichtig gemacht ist. Die melaminharzgetränkten Papierbahnen haben eine hohe Dichtigkeit gegen Eindringen von Feuchtigkeit und eine hohe Abriebfestigkeit und Formstabilität.

Als Verlegeplatte eignet sich auch eine Mehrschicht- oder Schichtstoffplatte (Fig. 2), bei der die Trägerschicht 11 entsprechend wie die Deckschichten 7, 8 aus mehreren übereinanderliegenden und in Melaminharz oder dgl. getränkten Papierbahnen oder Pappe besteht. Bei beiden Arten von Verlegeplatten können aber auch die Deckschichten anders ausgebildet sein. Sie können durch Laminat-Platten gebildet sein, die auf die Spanplatte bzw. Trägerschicht 6 aufgeleimt sind. Die bevorzugte Ausbildung bildet aber die Deckschichten 7, 8, die aus den melaminharzgetränkten Papierbahnen bestehen. Diese Deckschichten sind auch pflegeleicht und wasserunempfindlich. Die eine Deckschicht kann vorteilhaft mit einer (nicht dargestellten) rutschfesten Profilierung versehen sein.

Zur Herstellung von Küchenarbeitsplatten, die gerade Kanten 15 aufweisen (Fig. 3) wird eine Trägerplatte 13 mit abgerundeten Kanten 16, die aus verschiedenen Materialien, wie z.B. einer Spanplatte bestehen kann, mit einer Schichtstoffplatte gem. Fig. 2 im sogenannten Postforming-Verfahren ummantelt. Die Schutzschicht 9 kann dabei vor oder nach der Ummantelung auf die Deckschicht 7 aufgebracht werden.

Zur Verbesserung der Abriebfestigkeit wird die eine Deckschicht 7 mit der Schutzschicht 9 versehen. Sie besteht aus ausgehärtetem Kunstharz. Vorzugsweise eignet sich als Kunstharz Desmodur-Desmophen (D-D-) oder säurehärtender (S-H-) Lack oder Polyurethan-Acryl-Lack oder andere strahlenhärtende Lacke oder Gemische dieser Lacke. Eine weitere Steigerung der Abriebfestigkeit kann dadurch erreicht werden, daß diesen Lacken anorganische Zusätze, sogenannte Abriebverfestiger, wie vorzugsweise
Quarzmehl, Aluminiumoxyd, Korunde oder Gemische dieser
Stoffe, zugegeben werden.

Zur Herstellung z.B. der Verlege- oder der Schichtstoffplatte 1 nach den Fig. 1 und 2 werden die Papierbahnen
der Deckschichten 7, 8 in vorkondensiertem Melaminharz
oder Melaminmischkondensatharz getränkt und auf die vorgefertigte Trägerschicht 6 (Spanplatte) bzw. 11 (Papier,
Pappe) gelegt. Danach werden diese Plattenschichten
in einer Presse, vorzugsweise einer Kontaktpresse , verpreßt, deren Innenflächen durch Preßbleche die Oberflächenstruktur der Mehrschichtplatte bestimmen.

Die Plattenschichten 6 bzw. 11 und 7, 8 werden dann bei
hohem Druck verpreßt und gleichzeitig so hoch erwärmt,
daß das vorkondensierte Melaminharz aufschmilzt.

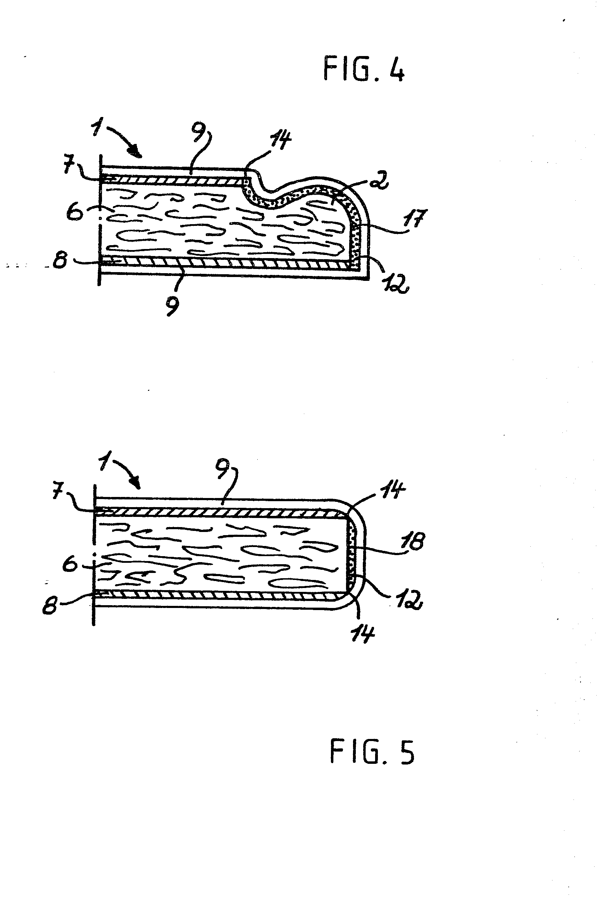

Falls mindestens die obere Deckschicht 7 mit einer
Struktur versehen werden soll, wird in die entsprechende
Preßhälfte ein entsprechend strukturiertes Blechprofil
gelegt. Danach läßt man die so gebildete Mehrschicht-
und Verlegeplatte 1 aushärten und nimmt sie erst dann
aus der Presse. Danach werden die Plattenränder 2, 3
durch Nacharbeiten abgerundet oder mit der Nut 4 und
der Feder 5 versehen, um die gewünschte Konturenform
zu erhalten. Diese Kanten können beispielsweise bei
Tischplatten 1 (Fig. 4 und 5) auch noch mit einem Anleimer 12 versehen werden, der sich entweder abgerundet
über die ganze Höhe der Plattenkante 17 und bis in einen
Teil der Oberseite der Tischplatte 1 erstreckt (Fig. 4)
oder nur als gerades Teil an der Tischkante 18 (Fig. 5)
vorgesehen ist. Im ersten Fall schließt der Anleimer 12
an der Stelle 14 stoßend an die Deckschicht 7 an, während
im anderen Fall die Eckbereiche 14 zwischen den Deckschichten 7, 8 und dem Anleimer 12 rundgeschliffen sind.
An den Stellen 14 beider Tischplatten 1 besteht die Gefahr, daß Feuchtigkeit in die Platten eindringen und sie
beschädigen kann.

Schließlich wird die so vorgefertigte Mehrschichtplatte
1 mit der Schutzschicht 9 versehen, indem der Kunstharzlack in flüssiger Form auf die Plattenaußenseite aufgetragen wird. Der Kunstharzlack kann je nach Bedarf
wiederholt aufgetragen werden um eine möglichst dicke
und besonders abriebfeste Schutzschicht zu erhalten.
Hierbei kann der Auftrag in unterschiedlicher Dicke
und auch in unterschiedlichen Verfahren erfolgen. Die
Dicke der Schutzschicht 9 läßt sich beliebig variieren,
so daß eine optimale Anpassung an die technischen und
wirtschaftlichen Gegebenheiten auf einfache Weise möglich
ist. Die Schutzschicht 9 kann relativ dick sein; so
können beispielsweise bis zu 300 g/m$^2$ Kunstharz auf
die Deckschichten aufgetragen werden. Bei richtiger
Einstellung der Lackkomponenten, Auftragsart und Aushärteverfahren besteht keine Gefahr, daß sich im Lack
Risse bilden oder daß sich der Lack nicht fest mit der
zugehörigen Deckschicht verbindet oder daß das Dekorbild
unscharf und verschwommen erscheint. Vorzugsweise erfolgt
der Auftrag des Kunstharzes durch Spritz- und/oder Walz-
oder Gießverfahren. Das flüssige Kunstharz der Schutzschicht enthält vorzugsweise anorganische Zusätze,
nämlich Quarzmehl und/oder Aluminiumoxyd und/oder Korunde,
um die Abriebfestigkeit zu erhöhen.

Da die Schutzschicht 9 erst nach dem Verpressen der
Mehrschichtplatte 1 aufgetragen wird, ist sichergestellt,
daß die abrasiven anorganischen Zusätze, die sogenannten
Abriebverfestiger, zu keiner Beschädigung der teuren
Preßbleche der Presse führen können und auch keinen Verschleiß der Bearbeitungswerkzeuge bewirken. Das nachträgliche Aufbringen der Schutzschicht 9 ist technisch
sehr einfach und kann daher schnell und ohne besonderen
Aufwand und damit mit geringen Kosten durchgeführt
werden.

Die Schutzschicht kann auch auf bereits fertige andere
Platten, wie Arbeitstischplatten oder Tischplatten oder
dgl., aufgebracht werden, um deren Abriebfestigkeit zu
vergrößern.

Die zusätzliche Schutzschicht 9 hat noch den Vorteil, daß
sie beim Auftragen auf die Plattenfläche und Plattenkante
einen besseren Schutz der Plattenkanten an den kritischen
Stellen 14 (Fig. 4, 5) gewährleistet, an denen die Gefahr
besteht, daß durch die Nachbearbeitung die Deckschichten
verletzt werden und mit der Zeit Feuchtigkeit in die
Trägerschicht 6 bzw. 11 eindringt und die Kanten zerstört.

Auch wenn beispielsweise die Deckschicht 7 z.B. der Verlegeplatte 1 eine (nicht dargestellte) Oberflächenstruktur
hat, ist diese trotz der aufgebrachten Schutzschicht 9
deutlich sichtbar, da der Kunstharz zur Herstellung der
Schutzschicht klar durchscheinend eingestellt werden kann.

Die oben beschriebene Mehrschichtplatte kann auch als
Arbeitsplatte für Küchen verwendet werden. Sie weist
dann aber weder die Nut 2 noch die Feder 3 auf, sondern
hat glatte Ränder.

Patentanwalt
Dipl.-Ing. Walter Jackisch
7 Stuttgart N, Menzelstraße 40

0197324

Gruber & Weber
Obertsroter Str. 9

A 1-86 928/kmi
7.3.1986

7562 Gernsbach 5

Ansprüche

1. Gepreßte Mehrschichtplatten, insbesondere mit einem
Dekor versehene Schichtpreßstoff-, Endloslaminatplatte oder kunststoffbeschichtete Flachpreß-Spanplatte, für Fußböden, Arbeitsplatten für Küchen oder
dgl., mit
mindestens einer Trägerschicht und mindestens einer
ausgehärteten Deckschicht, die aus mindestens einer
mit mindestens einem Duroplast, insbesondere einem
Melaminharz oder Melaminmischkondensatharz, getränkten Papierbahn besteht,
dadurch gekennzeichnet, daß mindestens auf die eine
Deckschicht (7) eine den Abriebwert verbessernde
Schutzschicht (9) aus einem aushärtbaren Kunstharz
aufgetragen ist.

2. Platte nach Anspruch 1,
dadurch gekennzeichnet, daß die Schutzschicht (9)
aus einem Lack, vorzugsweise einem Polyurethanlack
und/oder säurehärtenden (SH-) Lack und/oder strahlenhärtendem Lack besteht.

3. Platte nach Anspruch 1 oder 2,
dadurch gekennzeichnet, daß die Schutzschicht (9)
zur Erhöhung der Abriebfestigkeit anorganische Zusätze, wie Quarzmehl und/oder Aluminiumoxyd und/oder
Korund enthält.

- 2 -

4. Verfahren zur Herstellung einer Mehrschichtplatte
nach einem der Ansprüche 1 bis 3, bei dem die Papierbahn der Deckschicht mit einem Duroplast getränkt,
dann mit der Trägerschicht verpreßt wird und anschließend die äußeren verpreßten Plattenschichten
während des Verpressens weitgehend ausgehärtet werden,
dadurch gekennzeichnet, daß nach dem Verpressen der
Plattenschichten (6 bis 8 und 11) auf die vorgefertigte
Mehrschichtplatte (1) ein Kunstharz in flüssiger
Form (9) aufgetragen wird.

5. Verfahren nach Anspruch 4,
dadurch gekennzeichnet, daß die Schutzschicht (9)
durch mehrere gleiche und/oder unterschiedliche
Aufträge hergestellt wird.

6. Verfahren nach Anspruch 4 oder 5,
dadurch gekennzeichnet, daß das Kunstharz durch Aufspritzen und/oder Walzen und/oder Gießen des Kunstharzes mindestens auf die Deckschichten (7) vorzugsweise die Deckschichten und die Plattenränder (2, 3,
12) aufgetragen wird.

7. Verfahren nach Anspruch 6,
dadurch gekennzeichnet, daß die Schutzschicht (9)
nach dem Auftragen des Kunstharzes, vorzugsweise in
Raumluft, im Wärmetunnel, durch ultraviolette
Strahlenhärtung oder dgl., ausgehärtet wird.

8. Verfahren, bei dem die gepreßten, ausgehärteten
Platten an den Kanten nachgearbeitet werden, nach
einem der Ansprüche 4 bis 7,
dadurch gekennzeichnet, daß das Kunstharz nach der Bearbeitung der Plattenkanten aufgebracht wird.

FIG. 1

FIG. 2

FIG. 3

# FIG. 4

# FIG. 5